# FASCICULE DE BREVET EUROPEEN

(11) **EP 1 507 098 B1**
(45) Date de publication et mention de la délivrance du brevet: **06.09.2006**
(21) Numéro de dépôt: 04300481.1
(22) Date de dépôt: 27.07.2004
(51) Int. Cl.: F16H 55/28, B62D 3/12

(54) **Poussoir de crémaillère d'un système de direction de véhicule automobile**
Zahnstangen-Druckstück für die Lenkungeinrichtung eines Kraftfahrzeuges
Pressure yoke for a rack and pinion steering gear of a motor vehicle

(30) Priorité: 13.08.2003 FR 0309897
(43) Date de publication de la demande: 16.02.2005
(73) Titulaire: Compagnie Plastic Omnium, 69007 Lyon (FR)
(72) Inventeur: Pionnier, Jérôme, 52800 Nogent (FR); Broise, Sébastien, 52200 Langres (FR); Poinsel, Christophe, 52200 Langres (FR); Agnus, Bruno, 52000 Chaumont (FR)
(74) Mandataire: Remy, Vincent Noel Paul

(56) Documents cités:
- DE-A- 3 622 377
- US-A- 5 746 285
- PATENT ABSTRACTS OF JAPAN vol. 2002, no. 04, 4 août 2002 (2002-08-04) & JP 2001 347956 A (TOYODA MACH WORKS LTD; OILES IND CO LTD), 18 décembre 2001 (2001-12-18)

## Description

La présente invention a pour objet un poussoir de crémaillère d'un système de direction de véhicule automobile.

Un tel système peut être de type manuel, éventuellement muni d'une assistance hydraulique ou électrique.

Un système de direction comporte de manière conventionnelle :
- une crémaillère,
- une colonne de direction avec un pignon en prise sur la crémaillère,
- un poussoir de crémaillère comportant une surface de frottement destinée à s'appliquer sur la crémaillère pour s'opposer à des efforts exercés sur celle-ci.

Le poussoir doit notamment pouvoir résister à des efforts mécaniques importants, être suffisamment glissant pour ne pas générer d'efforts excessifs dus au frottement sur la crémaillère, et résister à l'abrasion.

Le poussoir peut être réalisé de différentes manières.

Le poussoir peut, par exemple, comporter un corps métallique et, fixé dessus, un patin réalisé en matière thermoplastique.

Le patin peut être rigide, étant réalisé par exemple à partir d'une plaque métallique et du PTFE, et fixé sur le corps du poussoir par emboutissage.

Dans les cas précités, le patin est généralement assemblé sur le corps du poussoir au moment du montage du système de direction.

Le poussoir peut encore être dépourvu de patin, la surface de frottement sur la crémaillère étant formée par une paroi du corps du poussoir en matière thermoplastique. Le document DE-A-3622377 montre un poussoir avec toutes les caractéristiques du préambule de la revendication indépendante 1 ainsi qu'un procédé de fabrication d'un tel poussoir.

L'invention vise notamment à améliorer la fixation d'un patin sur le corps de poussoir et permettre l'utilisation d'une large gamme de matériaux pour réaliser le patin.

L'invention a pour objet un poussoir de crémaillère d'un système de direction de véhicule automobile, ce poussoir comportant :
- un corps,
- un patin formant une surface de frottement destinée à s'appliquer sur une crémaillère du système de direction,
caractérisé par le fait que le corps comporte :
- une ou plusieurs surfaces de butée contre laquelle ou lesquelles s'applique latéralement le patin lorsqu'il est fixé sur le corps du poussoir,
- au moins un relief de maintien agencé pour maintenir le patin sur le corps du poussoir, en appui sur la ou les surfaces de butée.

Grâce à l'invention, la fixation du patin peut s'effectuer sans emboutissage de celui-ci et il est possible d'utiliser, pour réaliser le patin, un matériau tout aussi bien rigide que souple, par exemple un matériau souple inadapté ou peu adapté à un emboutissage.

L'invention permet en outre de pouvoir assembler le patin avec le corps du poussoir sur un premier lieu de production et livrer les poussoirs ainsi assemblés vers un deuxième lieu de production où le système de direction est monté.

De plus, grâce à la présence de la ou des surfaces de butée, il est possible de fixer le corps du poussoir avec une orientation relative prédéterminée.

Dans un exemple de mise en oeuvre de l'invention, le patin peut se présenter sensiblement sous la forme d'une bande avec deux bords longitudinaux sensiblement parallèles, cette bande ayant notamment, lorsqu'elle est observée de côté, une concavité dirigée vers une direction opposée au corps du poussoir

De préférence, le corps du poussoir présente un renfoncement agencé pour recevoir au moins partiellement le patin, la ou les surfaces de butée étant formées sur une ou plusieurs parois du renfoncement.

Le renfoncement forme avantageusement deux surfaces de butée sensiblement parallèles sur chacune desquelles s'applique un bord longitudinal du patin.

Le relief de maintien peut comporter un picot apte à coopérer avec le patin et pouvant être aplati, notamment par bouterollage, et le patin peut comporter une patte avec une encoche dans laquelle pénètre le picot et sur laquelle s'applique le picot aplati.

Le relief peut, en variante, être élastiquement déformable et être agencé pour permettre la mise en place du patin sur le corps par encliquetage.

Dans un exemple de mise en oeuvre de l'invention, le patin comporte une matière thermoplastique.

Le patin peut notamment comporter une nappe de métal déployé et du PTFE.

Le corps du poussoir peut être réalisé en matière thermoplastique, notamment par injection.

L'invention a encore pour objet un système de direction de véhicule automobile, comportant :
- une crémaillère,
- une colonne de direction avec un pignon en prise sur la crémaillère,
- un poussoir de crémaillère tel que défini dans l'une quelconque des revendications précédentes, la surface de frottement du poussoir venant s'appliquer contre la crémaillère afin notamment de s'opposer à des efforts exercés sur cette crémaillère.

L'invention a encore pour objet un procédé de fabrication d'un poussoir d'un système de direction de véhicule automobile, comportant les étapes suivantes :
- fournir un patin,
- fournir un corps de poussoir comportant une ou plusieurs surfaces de butée contre laquelle ou lesquelles s'applique latéralement le patin lorsqu'il est fixé sur le corps du poussoir, et au moins un relief de maintien agencé pour maintenir le patin sur le corps du poussoir,
- placer le patin sur le corps, en appui latéral sur la ou les surfaces de butée, le relief de maintien maintenant le patin sur le corps du poussoir.

Le relief de maintien peut comporter un picot apte à coopérer avec le patin et pouvant être aplati, notamment par bouterollage.

La déformation du picot peut s'effectuer à température ambiante.

En variante, préalablement à la déformation du picot, le corps du poussoir peut être chauffé.

La déformation du picot peut encore s'effectuer à l'aide d'un outil préchauffé.

La déformation du picot peut également s'effectuer à l'aide d'un outil sur lequel sont générés des ultrasons.

Le procédé précité peut être mis en oeuvre directement sur la ligne de fabrication des poussoirs de crémaillère, en utilisant notamment un périphérique d'assemblage, avec un robot par exemple, pour assembler le patin sur le corps de poussoir et bouteroller les picots.

Ce procédé permet notamment de livrer un ensemble tout assemblé, ce qui évite à un client d'avoir à réaliser le montage lui-même.

L'invention sera mieux comprise à la lecture de la description détaillée qui va suivre, d'exemples de mise en oeuvre non limitatifs de l'invention, et à l'examen du dessin détaillé, sur lequel :
- la figure 1 est une vue très schématique et partielle, en coupe, d'un système de direction de véhicule automobile,
- la figure 2 représente, schématiquement et partiellement, un corps d'un poussoir conforme à l'invention,
- la figure 3 représente, schématiquement et partiellement, un patin destiné à être assemblé avec le corps de poussoir de la figure 2,
- la figure 4 représente, schématiquement et partiellement, le corps de poussoir de la figure 2 avec le patin placé dessus, avant déformation des reliefs de maintien,
- la figure 5 est une vue analogue à celle de la figure 4, après déformation des reliefs de maintien,
- la figure 6 représente, schématiquement et partiellement, un corps d'un poussoir conforme à un autre exemple de mise en oeuvre de l'invention,
- la figure 7 représente, schématiquement et partiellement, un patin destiné à être assemblé avec le corps de poussoir de la figure 6, et
- la figure 8 représente, schématiquement et partiellement, le poussoir après assemblage du corps de poussoir de la figure 6 et du patin de la figure 7.

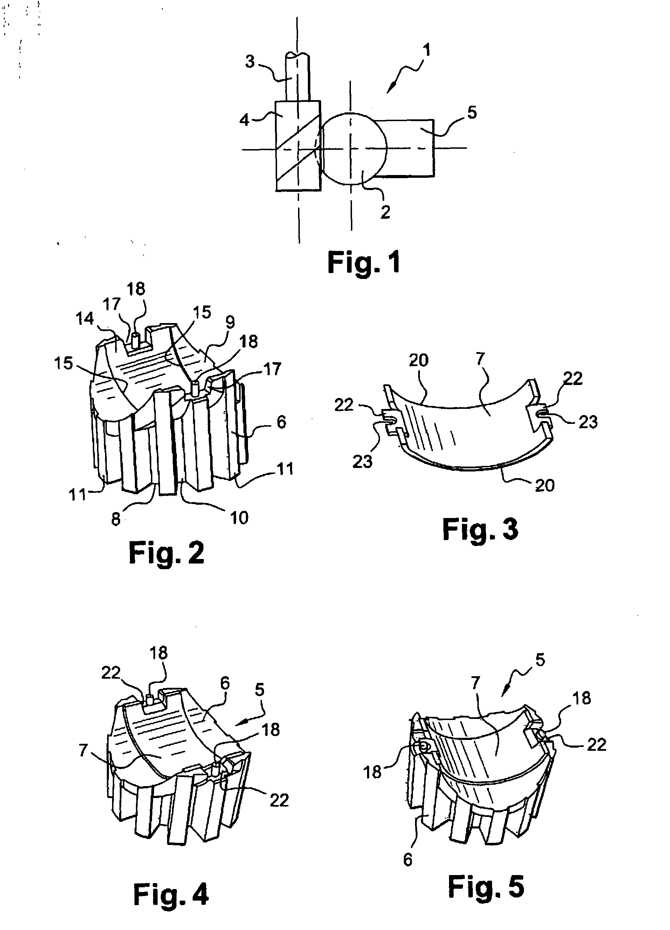

On a représenté très schématiquement sur la figure 1 différents éléments d'un système de direction 1 de véhicule automobile, à savoir une crémaillère 2, une colonne de direction 3 avec un pignon 4 en prise sur la crémaillère 2 et un poussoir de crémaillère 5 s'appliquant sur la crémaillère 2.

On a représenté sur les figures 2 et 3 respectivement un corps de poussoir 6 et un patin 7 destinés à former un poussoir 5 conforme à l'invention.

Le corps de poussoir 6 comporte une face inférieure 8 et une face supérieure 9 entre lesquelles s'étend une paroi latérale 10.

Cette paroi latérale 10 comporte des nervures 11 parallèles s'étendant entre les deux faces 8 et 9.

La face supérieure 9 est définie géométriquement par l'intersection de deux cylindres d'axes perpendiculaires et présente une concavité dirigée en direction opposée à la face inférieure 8.

La face supérieure 9 comporte un renfoncement 14 avec deux parois longitudinales parallèles définissant deux surfaces de butées 15.

Le corps de poussoir 6 comporte à chaque extrémité du renfoncement 14 un évidement 17 dans lequel s'étend un relief de maintien 18 sous la forme d'un picot apte à être aplati par bouterollage.

Dans l'exemple considéré, le corps de poussoir 6 est réalisé d'un seul tenant par injection d'une matière thermoplastique, notamment du POM chargé ou du PA chargé.

Le patin 7 se présente sous la forme d'une bande avec deux bords longitudinaux 20 sensiblement parallèles, cette bande ayant une concavité, lorsqu'elle est observée de côté, dirigée à l'opposé du corps du poussoir.

Le patin 7 comporte à chaque extrémité une patte 22 pourvue d'une encoche 23 dans laquelle pénètre le picot 18 avant son aplatissement et sur laquelle s'applique le picot 18 aplati.

Le patin 7 peut être réalisé en matière thermoplastique ou en un matériau contenant une nappe de métal déployé et du PTFE, à l'instar du matériau décrit dans le brevet européen EP 656 252 du déposant.

Les pattes 22 peuvent par exemple être formées par découpe et pliage de la bande formant le patin 7.

L'assemblage du patin 7 sur le corps de poussoir 6 est réalisé en plaçant le patin 7 dans le renfoncement 14 du corps de poussoir 6, comme illustré sur la figure 4.

Comme on peut le voir, la mise en place du patin 7 sur le corps de poussoir 6 s'effectue avec une orientation relative prédéterminée.

Cette mise en place du patin 7 sur le corps de poussoir 6 peut être réalisée manuellement ou automatiquement.

On procède ensuite à la déformation des picots 18, par bouterollage, permettant de les aplatir sur les pattes 22 du patin 7, comme illustré sur la figure 5.

La déformation des picots 18 peut s'effectuer à température ambiante ou en chauffant le corps de poussoir 6 préalablement à la déformation des picots 18 ou encore en effectuant la déformation à l'aide d'un outil préchauffé.

L'invention n'est pas limitée à des reliefs de maintien déformés par bouterollage.

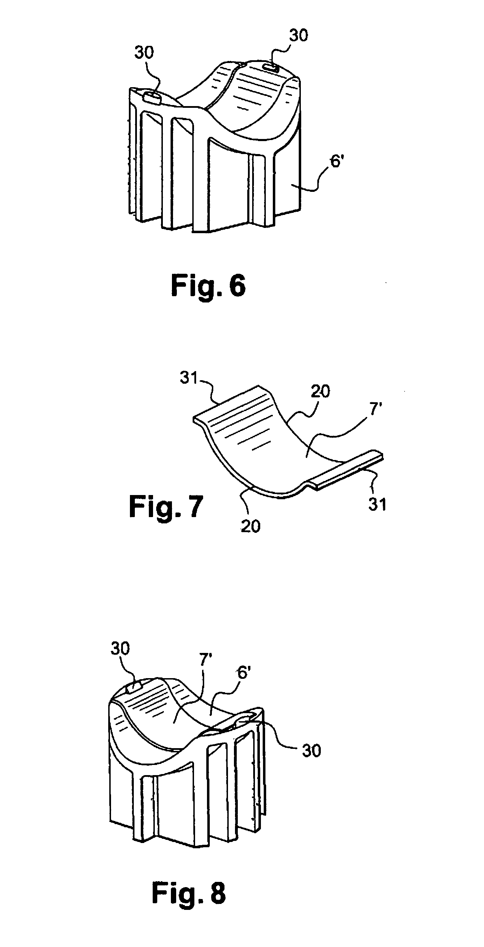

On a représenté sur les figures 6 à 8 un autre exemple de mise en oeuvre de l'invention.

Dans cet exemple, le corps de poussoir 6' se différencie du corps de poussoir 6 par le fait qu'il comporte à chaque extrémité du renfoncement 14 un relief de maintien élastiquement déformable 30, constitué d'une dent, agencé pour permettre la mise en place du patin dans le renfoncement 14 par encliquetage.

Le patin 7' illustré sur la figure 7 est dépourvu de pattes 22 et présente deux bords transversaux 31 rectilignes et parallèles.

La mise en place du patin 7' sur le corps de poussoir 6' est obtenue en l'insérant dans le renfoncement 14 et en déformant élastiquement les reliefs de maintien 30.

Bien entendu, l'invention n'est pas limitée aux exemples de mise en oeuvre qui viennent d'être décrits.

Les surfaces de butée 15 peuvent notamment être réalisées, non pas sur des parois d'un renfoncement, mais sur des nervures parallèles en saillie de la face supérieure 9 du corps de poussoir.

## Revendications

1. Poussoir de crémaillère (5) d'un système de direction de véhicule automobile (1), ce poussoir comportant :
- un patin (7 ; 7') formant une surface de frottement destinée à s'appliquer sur une crémaillère (2) du système de direction (1),
- un corps (6 ; 6'), celui-ci comportant :
- une ou plusieurs surfaces de butée (15) contre laquelle ou lesquelles s'applique latéralement le patin lorsqu'il est fixé sur le corps du poussoir (6 ; 6'),
- au moins un relief de maintien (18) agencé pour maintenir le patin (7; 7') sur le corps du poussoir (6 ; 6'), en appui sur la ou les surfaces de butée.
**caractérisé par le fait que** le relief de maintien comporte un picot (18) apte à coopérer avec le patin (7) et étant aplati par bouterollage.

2. Poussoir selon la revendication 1, **caractérisé par le fait que** le patin (7 ; 7') se présente sensiblement sous la forme d'une bande avec deux bords longitudinaux sensiblement parallèles (20), cette bande ayant notamment, lorsqu'elle est observée de côté, une concavité dirigée vers une direction opposée au corps du poussoir.

3. Poussoir selon l'une des revendications 1 et 2, **caractérisé par le fait que** le corps (6 ; 6') présente un renfoncement (14) agencé pour recevoir au moins partiellement le patin (7 ; 7'), la ou les surfaces de butée (15) étant formées sur une ou plusieurs parois du renfoncement (14).

4. Poussoir selon la revendication 3, **caractérisé par le fait que** le renfoncement (14) forme deux surfaces de butée (15) sensiblement parallèles sur chacune desquelles s'applique un bord longitudinal (20) du patin.

5. Poussoir selon l'une quelconque des revendications précédentes, **caractérisé par le fait que** le patin (7) comporte une patte (22) avec une encoche (23) dans laquelle pénètre le picot (18) et sur laquelle s'applique le picot aplati.

6. Poussoir selon l'une quelconque des revendications précédentes, **caractérisé par le fait que** le patin (7 ; 7') comporte une matière thermoplastique.

7. Poussoir selon la revendication 6, **caractérisé par le fait que** le patin comporte une nappe de métal déployé et du PTFE.

8. Poussoir selon l'une quelconque des revendications précédentes, **caractérisé par le fait que** le corps du poussoir (6 ; 6') est réalisé en matière thermoplastique, notamment par injection.

9. Système de direction de véhicule automobile (1), comportant :
- une crémaillère (2),
- une colonne de direction (3) avec un pignon (4) en prise sur la crémaillère (2),
- un poussoir de crémaillère (5) tel que défini dans l'une quelconque des revendications précédentes, la surface de frottement du poussoir venant s'appliquer contre la crémaillère afin notamment de s'opposer à des efforts exercés sur cette crémaillère.

10. Procédé de fabrication d'un poussoir de crémaillère (5) d'un système de direction de véhicule automobile, comportant les étapes suivantes :
- fournir un patin (7 ; 7'),
- fournir un corps de poussoir (6 ;6') comportant une ou plusieurs surfaces de butée (15) contre laquelle ou lesquelles s'applique latéralement le patin lorsqu'il est fixé sur le corps du poussoir, et au moins un relief de maintien (18) agencé pour maintenir le patin sur le corps du poussoir,
- placer le patin (7 ; 7') sur le corps (6 ; 6'), en appui latéral sur la ou les surfaces de butée (15), le relief de maintien (18) maintenant le patin sur le corps du poussoir, et comportant un picot (18) apte à coopérer avec le patin et étant aplati par bouterollage.

11. Procédé selon la revendication 10, **caractérisé par le fait que** la déformation du picot s'effectue à température ambiante.

12. Procédé selon la revendication 10, **caractérisé par le fait que**, préalablement à la déformation du picot, le corps du poussoir est chauffé.

13. Procédé selon la revendication 10, **caractérisé par le fait que** la déformation du picot s'effectue à l'aide d'un outil préchauffé.

14. Procédé selon la revendication 10, **caractérisé par le fait que** la déformation du picot s'effectue à l'aide d'un outil sur lequel sont générés des ultrasons.

## Claims

1. A rack thrust bearing (5) for a motor vehicle steering system, the thrust bearing comprising :
. a shoe (7; 7') forming a friction surface designed to press against a rack (2) of the steering system (1),
. a body (6; 6'), said body comprising :
one or more abutment surfaces (15) against which the shoe presses laterally when it is fixed on the body of the thrust bearing (6, 6'),
. at least one holding portion in relief (18) arranged so as to hold the shoe (7; 7') on the body of the thrust bearing (6; 6'), bearing against the abutment surface(s), wherein the holding portion in relief (18) includes a peg that is suitable for co-operating with the shoe (7), and that is flattenable, in particular by die-flattening.

2. A thrust bearing according to claim 1, wherein the shoe (7; 7') is appreciably in the form of a strip with two appreciably parallel longitudinal edges (20), said strip, when it is observed side on, presenting in particular a concave face that faces away from the body of the thrust bearing.

3. A thrust bearing according to claim 1 and 2, wherein the body (6; 6') presents a recess (14) arranged to receive at least partially the shoe (7; 7'), the abutment surface(s) (15) being formed on one or more walls of the recess (14).

4. A thrust bearing according to claim 3, wherein the recess (14) forms two appreciably parallel abutment surfaces (15) against each of which a longitudinal edge (20) of the shoe presses.

5. A thrust bearing according to to any one of the previous claims, shoe (7) includes a tab (22) with a notch (23) into which the peg (18) penetrates, and against which the flattened peg presses.

6. A thrust bearing according to any one of the previous claims, wherein the shoe (7; 7') includes a thermoplastic material.

7. A thrust bearing according to claim 6, wherein the shoe includes an expanded metal metal sheet and PTFE.

8. A thrust bearing according to any one of the previous claims, wherein the body (6; 6') of the thrust bearing is made of a thermoplastic material, in particular by injection molding.

9. A motor vehicle steering system (1), comprising :
. a rack (2),
. a steering column (3) with a pinion (4) meshing with the rack (2),
. a rack thrust bearing (5) as defined in to any one of the previous claims, the friction surface of the thrust bearing coming to press against the rack so as to oppose, in particular, forces exerted on said rack.

10. A method of manufacturing a rack thrust bearing (5) for a motor vehicle steering system, the method comprising the following steps :
. providing a shoe (7; 7'),
. providing a thrust bearing body (6; 6') comprising one or more abutment surfaces (15) against which the shoe presses laterally when it is fixed one the body of the thrust bearing, and at least one holding portion in relief (18) arranged so as to hold the shoe on the body of the thrust bearing,
. placing the shoe (7; 7') on the body (6, 6'), said shoe bearing laterally against the abutment surface(s) (15), the holding portion in relief (18) holding the shoe on the body of the thrust bearing, and comprising a peg (18) that is suitable for co-operating with the shoe, and that is flattenable, in particular by die-flattening.

11. A method according to claim 10, wherein the peg is deformed at ambient temperature.

12. A method according to claim 10, wherein the body of the thrust bearing is heated prior to the peg being deformed.

13. A method according to claim 10, wherein the peg is deformed by means of a preheated tool.

14. A method according to claim 10, wherein the peg is deformed by means of a tool on which ultrasounds are generated.

## Patentansprüche

1. Zahnstangen-Schubstange (5) eines Kraftfahrzeug-Lenksystems (1), wobei diese Schubstange Folgendes aufweist:
- eine Gleitbacke (7; 7'), die eine Reibfläche bildet, die zum Einwirken auf eine Zahnstange (2) des Lenksystems (1) vorgesehen ist,
- einen Körper (6; 6'), wobei dieser Folgendes aufweist:
- eine oder mehrere Anschlagflächen (15), gegen die die Gleitbacke seitlich einwirkt, wenn sie am Körper (6; 6') der Schubstange befestigt wird,
- mindestens einen Haltevorsprung (18), der so angeordnet ist, dass er die Gleitbacke (7; 7') auf dem Körper der Schubstange (6; 6') durch Abstützen auf die eine oder die mehreren Anschlagflächen hält,
**dadurch gekennzeichnet, dass** der Haltevorsprung eine Spitze (18) aufweist, die mit der Gleitbacke (7) zusammenwirken kann und die durch Stauchen abgeflacht ist.

2. Schubstange nach Anspruch 1, **dadurch gekennzeichnet, dass** die Gleitbacke (7; 7') im Wesentlichen die Form eines Bandes mit zwei in Längsrichtung im Wesentlichen parallelen Rändern (20) aufweist, wobei dieses Band, insbesondere wenn man es von der Seite her betrachtet, eine konkave Ausformung zeigt, die sich in eine dem Körper der Schubstange entgegengesetzte Richtung erstreckt.

3. Schubstange nach einem der Ansprüche 1 und 2, **dadurch gekennzeichnet, dass** der Körper (6; 6') eine Verstärkung (14) aufweist, die so angeordnet ist, dass sie die Gleitbacke (7; 7') zumindest teilweise aufnehmen kann, wobei die eine oder die mehreren Anschlagflächen (15) auf einer oder mehreren Wandungen der Verstärkung (14) ausgebildet sind.

4. Schubstange nach Anspruch 3, **dadurch gekennzeichnet, dass** die Verstärkung (14) zwei im Wesentlichen parallele Anschlagflächen (15) bildet, wobei auf jede von ihnen ein Längsrand (20) der Gleitbacke einwirkt.

5. Schubstange nach einem der vorhergehenden Ansprüche, **dadurch gekennzeichnet, dass** die Gleitbacke (7) eine Klammer (22) mit einer Kerbe (23) aufweist, in die die Spitze (18) eindringt und auf die die abgeflachte Spitze einwirkt.

6. Schubstange nach einem der vorhergehenden Ansprüche, **dadurch gekennzeichnet, dass** die Gleitbacke (7; 7') einen thermoplastischen Werkstoff aufweist.

7. Schubstange nach Anspruch 6, **dadurch gekennzeichnet, dass** die Gleitbacke einen Metallüberzug sowie PTFE aufweist.

8. Schubstange nach einem der vorhergehenden Ansprüche, **dadurch gekennzeichnet, dass** der Körper der Schubstange (6; 6') aus einem thermoplastischen Werkstoff hergestellt wird, insbesondere durch Spritzgießen.

9. Kraftfahrzeug-Lenksystem (1), das Folgendes aufweist:
- eine Zahnstange (2),
- eine Lenksäule (3) mit einem Ritzel (4), das in die Zahnstange eingreift,
- eine Zahnstangen-Schubstange (5) gemäß einem beliebigen der vorhergehenden Ansprüche, wobei die Reibfläche der Schubstange auf die Zahnstange einwirkt, um insbesondere den auf diese Zahnstange ausgeübten Kräften entgegenzuwirken.

10. Herstellungsverfahren einer Zahnstangen-Schubstange (5) eines Kraftfahrzeug-Lenksystems, das die folgenden Stufen aufweist:
- Bereitstellen einer Gleitbacke (7; 7'),
- Bereitstellen eines Schubstangenkörpers (6; 6'), der eine oder mehrere Anschlagflächen (15) aufweist, gegen die die Gleitbacke seitlich einwirkt, wenn sie am Körper der Schubstange befestigt wird, und mindestens eines Haltevorsprungs (18), der zum Halten der Gleitbacke auf dem Körper der Schubstange angeordnet ist,
- Aufsetzen der Gleitbacke (7; 7') auf den Körper (6; 6') sich seitlich aufstützend auf die eine oder die mehreren Anschlagflächen (15), wobei der Haltevorsprung (18) die Gleitbacke auf dem Körper der Schubstange hält und eine Spitze (18) aufweist, die mit der Gleitbacke zusammenwirkt und insbesondere durch Stauchen abgeflacht ist.

11. Verfahren nach Anspruch 10, **dadurch gekennzeichnet, dass** die Verformung der Spitze bei Umgebungstemperatur stattfindet.

12. Verfahren nach Anspruch 10, **dadurch gekennzeichnet, dass** der Körper der Schubstange vor der Verformung der Spitze erwärmt wird.

13. Verfahren nach Anspruch 10, **dadurch gekennzeichnet, dass** die Verformung der Spitze mittels eines vorgewärmten Werkzeugs erfolgt.

14. Verfahren nach Anspruch 10, **dadurch gekennzeichnet, dass** die Verformung der Spitze mittels eines Werkzeugs erfolgt, das durch Ultraschalwellen angeregt wird.
